# EUROPEAN PATENT SPECIFICATION

(11) **EP 2 276 956 B1**
(45) Date of publication and mention of the grant of the patent: **29.07.2015**
(21) Application number: 09750870.9
(22) Date of filing: 29.04.2009
(51) Int. Cl.: F16K 41/04, F16J 15/16, F16J 15/54, F16J 15/32, F16K 1/226

(54) **SEAL DEVICE**
DICHTUNGSVORRICHTUNG
DISPOSITIF D ETANCHEITE

(30) Priority: 23.05.2008 SE 0801209
(43) Date of publication of application: 26.01.2011
(73) Proprietor: Aktiebolaget Somas Ventiler, 661 23 Säffle (SE)
(72) Inventor: NILSSON, Curt, S-661 43 Säffle (SE)
(74) Representative: Johansson, Lars E.
(86) International application number: PCT/SE2009/050459
(87) International publication number: WO 2009/142575

(56) References cited:
- EP-A2- 0 905 423
- WO-A2-2007/146381
- DE-A1- 3 835 505
- DE-A1- 3 835 505
- US-A- 3 149 524
- US-A- 4 397 470
- US-A- 4 397 470
- US-A- 4 659 064
- US-A- 5 403 020
- US-A1- 2007 002 539

## Description

### TECHNICAL FIELD

The present invention relates to a method for sealingly mounting a shaft-like object (2), according to claim 1.

### BACKGROUND ART

It is well known to use seal devices, often seal rings, for positioning between a stationary and a rotary portion of a piece of equipment in order to create a tight lock and prevent leakage of fluids.

The seal rings are generally made from a highly elastic material, often rubber, which is necessary for mounting on the equipment but is also easily damaged and could become brittle from exposure to extreme environments, e.g. high temperature or aggressive substances. They are also exposed to considerable wear and tear inside the equipment, especially a high degree of friction, and as a result often need replacing.

Some of the problems concerning traditional, rubber based seal devices can be solved by using another, more durable material which still possesses the highly elastic properties required, but such materials are generally very expensive, often up to 100 times the cost for a traditional seal device.

A solution to this problem, shown in US 5,403,020 is to use split seal rings which can be mounted without overextending the flexible material of the seal. This seal is, however, meant to be mounted on a wall and socket type joint in order to prevent leakage, which is a rather complicated construction.

The same situation applies to another split seal ring, shown in US 4,576,384, where the problem of overextending an elastic seal ring is solved, but where the solution is unnecessarily complicated.

DE 3835505 shows a seal according to the preamble of claim 1.

There is a need for a simpler construction of a seal for preventing leakage where an elastic, easily deformed or damaged seal ring can be avoided but without causing the excessive costs related to more durable; elastic materials or a complicated construction needed with the seals shown in the above mentioned patents.

### DISCLOSURE OF THE INVENTION

It is the object of the present invention to eliminate or minimize the above described problems. This is achieved by a method for mounting a valve according to what is described in claim 1, where a seal device mounted on a shaft-like object passes a taper in a through hole of a housing in order to achieve a seal. Thereby, a seal device can be pressed firmly between the shaft-like object and the walls of the through hole so that leakage can be prevented. Also, since the seal device is slit and that slit has the function of expanding without substantially lengthening the seal device, the mounting on the shaft-like object in a way which does not risk damaging or deforming the seal device is possible.

According to another aspect of the invention, said tapers are placed such that the spindle reaches the widest portion of said tapers before it reaches the narrowest portion of said tapers. Thereby, the aforementioned pressing effect can be achieved.

According to a further aspect of the invention, said at least one shaft-like object and a groove pass a first taper during insertion before the seal device is placed into said first groove. Thereby, the mounting process is facilitated.

According to yet another aspect of the invention, said shaft-like object comprises one shaft and at least two grooves. Thereby, more than one seal can be achieved along the length of the shaft-like object, thus allowing for leakage prevention in several locations.

According to a further aspect of the invention, the seal device is mounted on a shaft-like object which is divided into at least two separate shafts. Thereby, greater opportunities for adapting the mounted valve to the present situation is achieved. Also, benefits can be achieved in the production of the shaft-like object.

According to the invention, the seal device is a split seal ring and is constructed in a material with a coefficient of elasticity in the range of 0,2-200 GPa, preferably 0,3-50 GPa, more preferably 0,4-5 GPa (Young's modulus). Thereby, the material used can be of a more resilient type which better withstands the strains of the friction and the possibly corrosive or otherwise highly damaging environment at a seal in a piece of equipment, while at the same time being more cost efficient than durable materials with highly elastic properties. It is also possible to mount the seal device easily, without risking overextending the device which could damage the material, and still achieving a reliable mounting. The seal device can also be used in all location where normally elastic rings, especially O-rings, are used.

According to another aspect of the invention, the seal device is split along an essentially straight line. Thereby, manufacturing the seal device becomes simple and convenient and also cost efficient, compared to construction of a device with a more complex shape.

### BRIEF DESCRIPTION OF THE DRAWINGS

The invention will now be described in more detail with reference to the appended figures, where:
Fig. 1 shows a plane view of a spindle and a valve separately, for use with the present invention,
Fig. 2 shows a plane view the spindle and the present invention being mounted in the valve,
Fig. 3 shows a plane view of the spindle at a later stage of the mounting, with the seal of invention close to its desired location,
Fig. 4 shows a planar side view of the spindle fully mounted in the valve,
Fig. 5 shows a perspective view of a preferred embodiment of the present invention,
Fig. 6 shows a cross-sectional view of a spindle mounted in a disk valve,
Fig. 7 shows an enlargement of a portion of the cross-sectional view of a spindle mounted in a disk valve,
Fig. 8 shows an enlargement of another portion of the cross-sectional view of a spindle mounted in a disk valve,
Fig. 9 shows a cross-sectional view of an alternative embodiment of a spindle mounted in a valve with the seal of the present invention,
Fig. 10 shows an enlargement of a portion of the cross-sectional view shown in Fig. 9, and
Fig. 11 shows an enlargement of another portion of the cross-sectional view shown in Fig. 9.

### DETAILED DESCRIPTION OF THE INVENTION

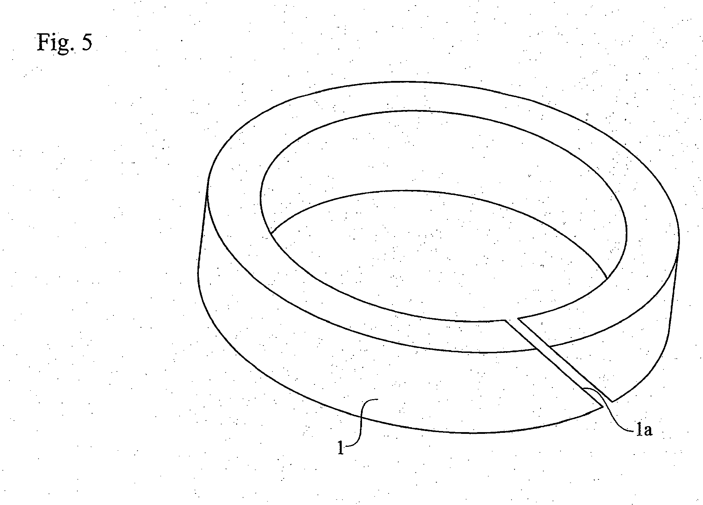

A preferred embodiment of the present invention is shown in Fig. 5, where a seal device 1 in the form of a ring 1 is shown. The seal device 1 is made from a durable and flexible, but essentially non-elastic material such that the shape of the ring can be varied but without overextending the ring. A slit 1a divides the ring, and combined with the flexible properties of the material, mounting on a piece of equipment is thus enabled without risking the damage to the ring that would follow from overextending the material.

In a preferred embodiment of the present invention, the seal device 1 is constructed in an expanded graphite material which is pressed into the desired shape. This material has a density of 0,3-2,2 g/cm3, preferably 0,5-1,8 g/cm3, and a preferred module of elasticity in the range of 500-1000 MPa. This material has several beneficial properties, such as the ability of functioning within the temperature range of -200°C-+550°C, and without risking hardening, drying or shrinking in this range. It also remains flexible under these conditions.

Other materials which can be used with the invention are for instance PTFE (Polytetrafluorethylene), PEEK (Polyetheretherketon) or PPS (Polyphenylensulphide). PTFE has a module of elasticity in the range of 0,4-2GPa and can be combined with a filling agent to achieve improved sliding ability or durability with regards to changes in temperature, or to wear and tear. PEEK can also be combined with a filling agent to achieve special properties and has a module of elasticity in the range of 3,5-6,5 GPa, with PPS having a slightly lower module of elasticity. Several other materials would of course be possible for use with the invention, but those described above can be seen as especially beneficial.

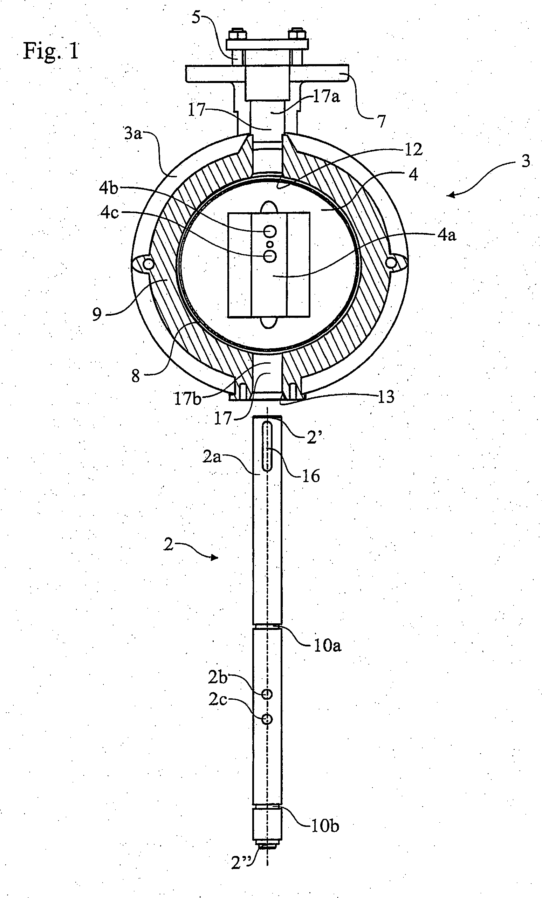

With reference to Fig. 1-4 the mounting of this preferred embodiment of a seal device 1 on a shaft-like object, such as a spindle 2, and the placement of said spindle 2 in a housing, such as the valve housing 3a of a valve assembly 3, will now be described in detail.

Fig. 1 shows the spindle 2 and a disk valve 3 separately. The spindle 2 comprises a shaft 2a with first and second grooves 10a, 10b where the seal device 1 (not shown) can be placed in order to achieve a tight seal. A keyway 16 is also provided on the shaft 2a for facilitating the rotation of the spindle 2. The disk valve assembly 3 comprises a valve housing 3a with a ring 9 for fastening a valve seat 8. A holder 4a for securing to a disk 4 (not shown) is provided inside the valve seat 8 and on the holders are holes 4b, 4c for securing the spindle 2 by using corresponding holes 2b, 2c present on the shaft 2a. A through hole 17 with upper end 17a and lower end 17b is provided through the disk valve assembly 3 for mounting the spindle 2, and an upper taper 12 and lower taper 13 on the ring 9 extend into said through hole 17 for squeezing the seal device 1 into place during mounting. A stuffing box 5 with a flange 7 is also placed around the upper section of the through hole 17.

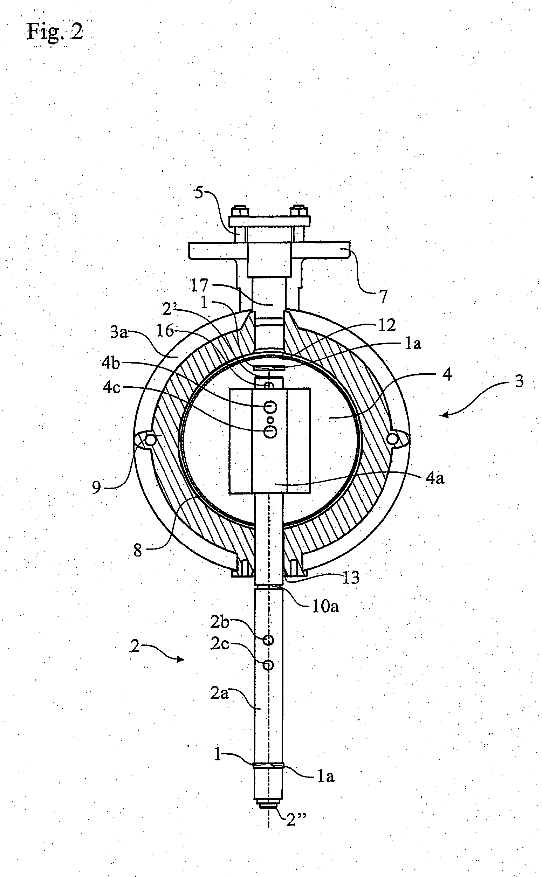

In Fig. 2, the spindle 2 is shown during an early stage of the mounting process, i.e. the process for sealingly mounting it in the disk valve assembly 3. A first end 2' of the spindle 2 is inserted through the lower through hole 17b and proceeds through a holder 4a. A seal ring 1 according to the invention is provided above said first end 2' for later fitting in the first groove 10a of the shaft 2a. At this early stage of the mounting process, a substantial portion of the shaft 2a has passed the lower taper 13, which fits closely around said shaft 2a but allows it to pass. In the second groove 10b, a seal device 1 according to the invention has already been placed.

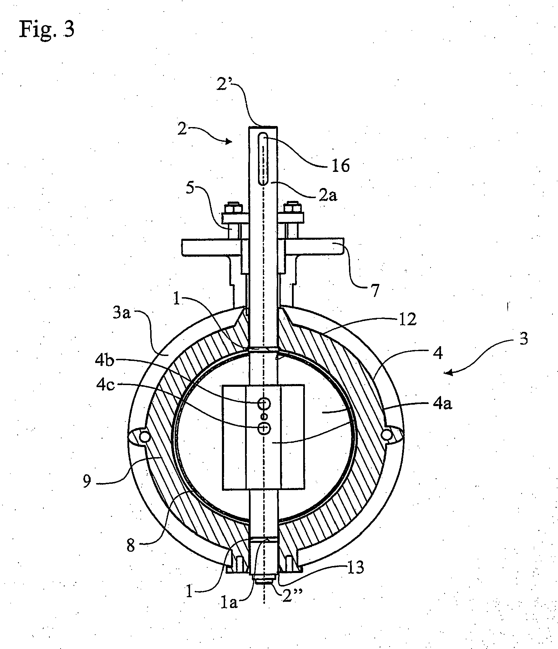

A later stage of the mounting process is shown in Fig. 3. The first end 2' of the spindle 2 has passed into and through the upper through hole 17a and now extends above a stuffing box 5 and a flange 7. The shaft is now close to its desired location where a seal around the disk 4 of the disk valve assembly 3 can be achieved. The seal device 1 which in Fig. 3 was not yet placed into the upper groove 10a now resides in said groove 10a and is nearing the upper taper 12. In the second groove 10b, another seal device 1 according to the invention is still placed and is nearing the lower taper 13. During the final step of the mounting process, each of these seal devices 1 in their grooves 10a, 10b will pass their tapers 12, 13, respectively, and the effect will be that the seal devices 1 are pressed firmly into their grooves 10a, 10b, thus locking them securely into place and creating tight seals for preventing substances such as fluids to pass from the central portion 4 of the disk valve assembly 3 and out into the through hole 17.

In the final position of the mounting process, the holes 2b, 2c in the spindle shaft 2a are placed directly adjacent to the corresponding holes 4b, 4c in the holder 4a and can be locked together using screws or any other suitable connection means. Thus, the spindle 2 is locked against the disk 4 via the holder 4a and as the spindle 2 rotates, so does the disk 4 of the disk valve assembly 3 while at the same time providing the above mentioned seals for preventing passage of substances from the centre of the disk valve assembly 3.

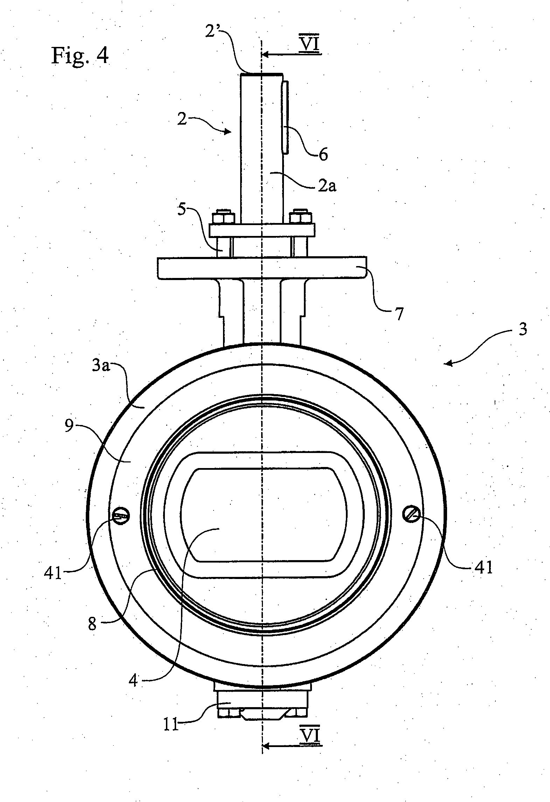

Fig. 4 shows the disk valve assembly 3 after the spindle 2 has been mounted with the disk 4 placed against the holder 4a (shown in Fig. 1-3). Said disk 4 can be locked into place as described above and can afterwards rotate along with the shaft 2a of the spindle 2. Inside the valve assembly 3, the seal devices 1 have reached their final locations after passing the tapers 12 or 13 and a tight seal is thereby achieved. An end portion 11 is placed over the second end 2" of the shaft 2a (shown in Fig. 3) and thus encloses the end. In Fig. 4, a key 6 has been placed into the keyway 16 (shown in Fig. 1-3) for facilitating the rotation of the spindle 2. Screws 41 for locking a cover into place are also shown in this figure.

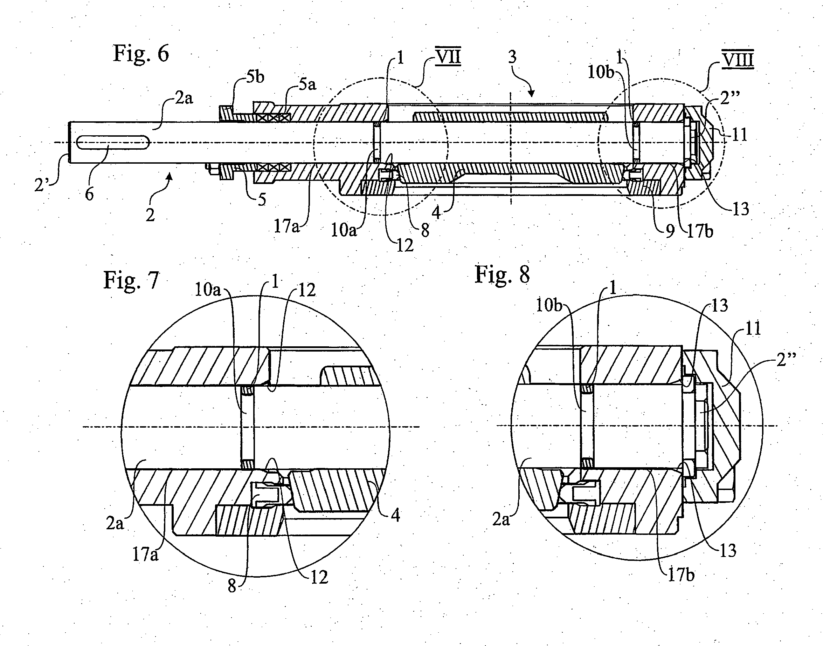

Fig. 6 shows a cross-sectional view of what can be seen in Fig. 4, i.e. the spindle 2 and the disk valve assembly 3 in their mounted stage. Here, the first end 2' of the spindle shaft 2a has been inserted through the lower portion 17b of the through hole 17 and further through the upper portion 17a of said through hole 17 until said first end 2' of the spindle shaft 2a protrudes from the disk valve assembly 3 and its housing 3a and stuffing box 5. The second end 2" of the spindle shaft 2a has thus reached the desired location so that the locking device 11 can be mounted on the lower end of the valve assembly 3, i.e. below the lower taper 13 as is also shown in Fig. 4.

A stuffing box 5 with sealing material 5a and gland 5b is placed adjacent to the upper through hole 17a and serves to create a seal for preventing any flowing media present in the valve from reaching the atmosphere, together with the aforementioned closing device 11.

During the mounting process, seal devices 1 have been placed in the grooves 10a, 10b, and thanks to the tapers 12, 13 these seals 1 have been pressed into place and form a tight seal between the shaft 2a and the walls of the through hole 17, thus ensuring that no substance such as a liquid can enter the shaft bearing areas 17a, 17b.

Fig. 7 shows an enlarged view of the section of Fig. 6 which is marked by the Roman numerals VII. Here, a section of the spindle shaft 2a placed in the through hole 17a can be seen, along with a seal device 1 placed in the upper groove 10a. During insertion, said seal device 1 in its groove 10a has passed the upper taper 12 in order to press the seal 1 firmly into place between the groove 10a and the wall of the upper through hole 17a, as is also described above. Beside the through hole 17 the disk 4 and the valve seat 8 can be seen.

In Fig. 8, an enlarged view of a lower section of the shaft 2a of the spindle is shown inside the lower through hole 17b. This corresponds to the section VIII of Fig. 6. Here, the shaft 2a is inserted into the lower through hole 17b in such a way that the seal 1 placed in the lower groove 10b passes the taper 13 and an area of bearing and thereafter provides a seal at the location shown in the figure. After the seal device 1 has reached the desired location, the second end 2" of the shaft 2a can be covered by the closing device 11 for sealing the through hole 17 and thus preventing any flowing media present inside the valve from reaching the atmosphere.

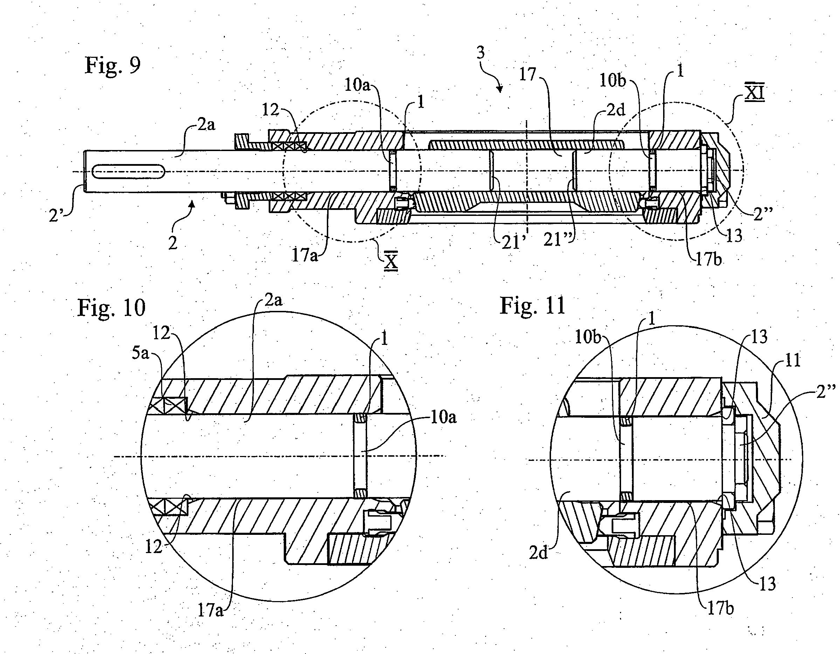

Fig. 9 shows an alternative embodiment of a spindle 2 mounted in a disk valve assembly 3. In this embodiment, the spindle 2 is separated into two different parts 2a, 2d, which can be inserted from different directions into the through holes 17a, 17b. The mounting of this embodiment will now be more closely described with reference to this Fig. 9, as well as the enlargements shown in Fig. 10 and Fig. 11.

In order to mount the spindle 2, a second end 21' of the first shaft 2a is now inserted into the upper through hole 17a by first passing the stuffing box 5. A seal device 1 has been placed in the first groove 10a, and as this portion of the shaft 2a passes the taper 12, a seal is achieved between the seal device 1 in the groove 10a and the walls of the through hole 17a. In its mounted position, the second end 21' has been inserted into one end of the aforementioned holder 4a and has been fastened there by any suitable means, for instance by screwing. The first end 2' of said shaft 2a remains outside the disk valve assembly 3, and the stuffing box 5 is provided for sealing the flowing media inside the disk valve assembly and thus preventing it from reaching the atmosphere.

A difference in this embodiment from the one described above in connection with the figures 1-8 is that the taper 12 is now placed in a different location, namely between the stuffing box 5 and the desired location of the seal device 1 in the mounted stage. The taper 12 also slants in the opposite direction, so that the widest part of the taper 12 is closest to the first end 2' of the spindle 2. Still, the narrowest part of the taper 12 is the one closest to the mounted location of the seal device 1, in order to achieve the effect of securing and tightening the seal.

The first end 21" of the second shaft 2d of the spindle 2 can be inserted into the lower through hole 17b of the valve assembly, and the insertion proceeds until this first end 21" has reached the holder 4a and the second end 2" of the shaft 2d has reached the desired location just outside the through hole 17b. During insertion, a seal device 1 placed in the second groove 10b has passed a lower taper 13 which serves to press the seal device 1 into place. The taper 13 is directed such that its narrowest part is the one closest to the mounted location of the seal device 1.

At the end of the mounting process, the first end 21 " of the shaft 2d is secured to the holder 4a and the second end 2" is secured by the locking device 11 described above.

It is possible to provide a valve assembly suitable for mounting with any of the embodiments described above, simply by providing a combination of the tapers shown in Fig. 7 and Fig. 10, such that a shaft 2a can be inserted from any of the directions described and still pass a suitably placed taper on the way to the mounted location shown in these figures.

The invention is not to be seen as limited by the embodiments described above and can be varied within the scope of the appended claims. It is for instance to be understood that many different kinds of valves or other devices needing a seal for preventing leakage can be used with the invention, especially valves which are to be fitted with a turning spindle. The seal device could also be manufactured in different shapes than as a ring. During the mounting process, the housing 3a can be adapted to receive the shaft-like object from different directions if the tapers are adjusted accordingly, as is also described in the above.

## Claims

1. A method for sealingly mounting a shaft-like object (2), the method comprising the steps of
- providing a housing (3a) with a through hole (17)
- providing at least one shaft-like object (2) with at least one groove (10a, 10b),
- providing at least one seal device (1) suitable for placement in said at least one groove (10a, 10b), and
- placing said at least one seal device (1) in said at least one groove (10a,10b) and inserting said at least one shaft-like object (2) into said through hole (17),
providing at least one taper (12, 13) in connection with said housing (3a), and that said at least one seal device (1) placed in said at least one groove (10a, 10b) passes said at least one taper (12, 13) during insertion and that a sealing function between said housing (3a) and said at least one shaft-like object (2) is achieved, **characterized in that** the seal device is made of a material with a coefficient of elasticity in the range of 0.2 - 200GPa, and that the seal device (1) is divided by a slit wherein said slit (1a) has the function of expanding without lengthening said seal device (1) before positioning in said groove (10a, 10b) by any method suitable, for instance by axial or radial mounting.

2. A method according to claim 1, **characterized in that** said housing (3a) is a valve housing.

3. A method according to claim 1 or 2, **characterized in that** said at least one taper (12, 13) is placed so that the shaft-like object (2) during insertion reaches the widest part of said at least one taper (12, 13) before it reaches the narrowest part of said at least one taper (12, 13).

4. A method according to any of the preceding claims, **characterized in that** said at least one shaft-like object (2) and a groove (10a) during insertion pass a first taper (13) before the seal device (1) is placed into said first groove (10a).

5. A method according to claim 4, **characterized in that** said shaft-like object (2) comprises one shaft (2a) and at least two grooves (10a, 10b).

6. A method according to any of the preceding claims, **characterized in that** the shaft-like object (2) has at least two separate shafts (2a, 2d).

7. A seal device used in the method of any of the preceding claims, **characterized in that** said seal device (1) is a split seal ring and constructed in a material with a Young's modulus of 0,3-50 GPa, preferably 0,4-5 GPa.

8. A seal device according to any of the preceding claims, **characterized in that** said seal device (1) is split along an essentially straight line (1a).

9. A shaft-like object arranged with at least one seal device according to claims 7 or 8, **characterized in that** said shaft-like object (2) comprises at least one groove (10a, 10b).

## Patentansprüche

1. Verfahren zum dichtenden Anbringen eines achsenartigen Objekts (2), wobei das Verfahren die Schritte umfasst:
- Bereitstellen eines Gehäuses (3a) mit einem Durchgangsloch (17);
- Bereitstellen mindestens eines achsenartigen Objekts (2) mit mindestens einer Rille (10a, 10b),
- Bereitstellen mindestens einer Dichtvorrichtung (1), die zur Platzierung in der mindestens einen Rille (10a, 10b) geeignet ist; und
- Platzieren der mindestens einen Dichtvorrichtung (1) in der mindestens einen Rille (10a, 10b) und Einsetzen des mindestens einen achsenartigen Objekts (2) in das Durchgangsloch (17),
- Bereitstellen mindestens einer Abschrägung (12, 13) in Verbindung mit dem Gehäuse (3a), und wobei die mindestens eine Dichtvorrichtung (1) in der mindestens einen Rille (10a, 10b) die mindestens eine Abschrägung (12,13) beim Einsetzen passiert und wobei eine Dichtfunktion zwischen dem Gehäuse (3a) und dem mindestens einen achsenartigen Objekt (2) erreicht wird,
**dadurch gekennzeichnet, dass** die Dichtvorrichtung aus einem Material mit einem Elastizitätskoeffizient im Bereich von 0,2 bis 200 GPa gefertigt ist, und dass die Dichtvorrichtung (1) durch einen Schlitz geteilt ist, wobei der Schlitz (1a) die Funktion hat, die Dichtvorrichtung (1) auszuweiten, ohne sie zu verlängern, bevor sie in der Rille (10a, 10b) angeordnet wird, durch irgendein geeignetes Verfahren, beispielsweise durch axialen oder radialen Einbau.

2. Verfahren nach Anspruch 1, **dadurch gekennzeichnet, dass** das Gehäuse (3a) ein Ventilgehäuse ist.

3. Verfahren nach Anspruch 1 oder 2, **dadurch gekennzeichnet, dass** die mindestens eine Abschrägung (12, 13) so angeordnet ist, dass das achsenartige Objekt (2) während des Einsetzens den breitesten Teil der mindestens einen Abschrägung (12, 13) erreicht, bevor es den engsten Teil der mindestens einen Abschrägung (12, 13) erreicht.

4. Verfahren nach einem der vorhergehenden Ansprüche, **dadurch gekennzeichnet, dass** das mindestens eine achsenartige Objekt (2) und eine Rille (10a) während des Einsetzens einer erste Abschrägung (13) passieren, bevor die Dichtvorrichtung (1) in der ersten Rille (10a) platziert wird.

5. Verfahren nach Anspruch 4, **dadurch gekennzeichnet, dass** das achsenartige Objekt (2) eine Achse (2a) und mindestens zwei Rillen (10a, 10b) umfasst.

6. Verfahren nach einem der vorhergehenden Ansprüche, **dadurch gekennzeichnet, dass** das achsenartige Objekt (2) mindestens zwei separate Achsen (2a, 2d) aufweist.

7. Dichtvorrichtung, verwendet im Verfahren nach einem der vorhergehenden Ansprüche, **dadurch gekennzeichnet, dass** die Dichtvorrichtung (1) ein geteilter Dichtring ist und aus einem Material mit einem Elastizitätsmodul von 0,3 - 50 GPa, vorzugsweise 0,4 bis 5 GPa hergestellt ist.

8. Dichtvorrichtung nach einem der vorhergehenden Ansprüche, **dadurch gekennzeichnet, dass** die Dichtvorrichtung (1) entlang einer im wesentlichen geraden Linie (1a) geteilt ist.

9. Achsenartiges Objekt, angeordnet mit mindestens einer Dichtvorrichtung nach Anspruch 7 oder 8, **dadurch gekennzeichnet, dass** das achsenartige Objekt (2) mindestens eine Rille (10a, 10b) umfasst.

## Revendications

1. Un procédé pour monter de façon étanche un objet (2) en forme d'arbre, le procédé comprenant les étapes consistant à
- utiliser un boîtier (3a) ayant un trou traversant (17),
- aménager au moins une gorge (10a, 10b) dans au moins un objet (2) en forme d'arbre,
- utiliser au moins un dispositif d'étanchéité (1) adapté pour être placé dans ladite au moins une gorge (10a, 10b), et
- placer ledit au moins un dispositif d'étanchéité (1) dans ladite au moins une gorge (10a, 10b) et insérer ledit au moins un objet (2) en forme d'arbre dans ledit trou traversant (17),
- aménager au moins une portion conique (12, 13) en relation avec ledit logement (3a), ledit au moins un dispositif d'étanchéité (1) placé dans ladite au moins une gorge (10a, 10b) passant par ladite au moins une portion conique (12, 13) lors de l'insertion, une fonction d'étanchéité entre ledit boîtier (3a) et ledit au moins un objet (2) en forme d'arbre étant réalisée, **caractérisé par le fait que** le dispositif d'étanchéité (1) est fait en un matériau ayant un coefficient d'élasticité situé dans la plage allant de 0,2 à 200 GPa et en ce que le dispositif d'étanchéité (1) est divisé par une fente, ladite fente (1a) ayant la fonction d'une expansion sans allongement dudit dispositif d'étanchéité (1) avant le positionnement dans ladite gorge (10a, 10b) par tout procédé approprié quelconque, par exemple par un montage radial ou axial.

2. Un procédé selon la revendication 1, **caractérisé en ce que** ledit boîtier (3a) est un boîtier de soupape.

3. Un procédé selon la revendication 1 ou la revendication 2, **caractérisé en ce que** ladite au moins une portion conique (12, 13) est placée de telle sorte que l'objet (2) en forme d'arbre, pendant l'insertion, atteint la partie la plus grande de ladite au moins une portion conique (12, 13) avant d'atteindre la partie la plus étroite de ladite au moins une portion conique (12, 13).

4. Un procédé selon l'une quelconque des revendications précédentes, **caractérisé en ce que** ledit au moins un objet (2) en forme d'arbre et une gorge (10a), lors de l'insertion, passent une première portion conique (13) avant que le dispositif d'étanchéité (1) soit placé dans ladite première gorge (10a).

5. Un procédé selon la revendication 4, **caractérisé en ce que** ledit objet (2) en forme d'arbre comprend un arbre (2a) et au moins deux gorges (10a, 10b).

6. Un procédé selon l'une quelconque des revendications précédentes, **caractérisé en ce que** l'objet (2) en forme d'arbre présente au moins deux arbres séparés (2a, 2d).

7. Un dispositif d'étanchéité utilisé avec le procédé selon l'une quelconque des revendications précédentes, **caractérisé en ce que** ledit dispositif d'étanchéité (1) est une bague d'étanchéité fendue et est construit en un matériau avec un module de Young) allant de 0,3 à 50 GPa, de préférence allant de 0,4 à 5 GPa.

8. Un dispositif d'étanchéité selon l'une quelconque des revendications précédentes, **caractérisé en ce que** ledit dispositif d'étanchéité (1) est fendu le long d'une ligne essentiellement droite (1a).

9. Un objet en forme d'arbre agencé avec au moins un dispositif d'étanchéité selon la revendication 7 ou la revendication 8, **caractérisé en ce que** ledit objet (2) en forme d'arbre comprend au moins une gorge (10a, 10b).
